# EUROPÄISCHE PATENTSCHRIFT

(11) **EP 2 643 381 B1**
(45) Veröffentlichungstag und Bekanntmachung des Hinweises auf die Patenterteilung: **18.06.2014**
(21) Anmeldenummer: 11785020.6
(22) Anmeldetag: 18.11.2011
(51) Int. Cl.: C08G 63/02, C08G 18/00

(54) **VERFAHREN ZUR HERSTELLUNG VON POLYRICINOLSÄUREESTER-POLYOLEN MIT PRIMÄREN HYDROXYL-ENDGRUPPEN**
PROCESS FOR PRODUCING POLYRICINOLEIC ACID-ESTER POLYOLS WITH PRIMARY HYDROXYLIC ENDGROUPS
PROCÉDÉ DE PRÉPARATION DE POLYOLS D'UN ESTER D'ACIDE POLYRICINOL DOTÉS DE GROUPES TERMINAUX HYDROXYLES PRIMAIRES

(30) Priorität: 22.11.2010 EP 10192094
(43) Veröffentlichungstag der Anmeldung: 02.10.2013
(73) Patentinhaber: Bayer Intellectual Property GmbH, 40789 Monheim am Rhein (DE)
(72) Erfinder: NEFZGER, Hartmut, 50259 Pulheim (DE); HOFMANN, Jörg, 47800 Krefeld (DE); BAUER, Erika, 41363 Jüchen (DE); KLESCZEWSKI, Bert, 51069 Köln (DE); LORENZ, Klaus, 41539 Dormagen (DE)
(74) Vertreter: BIP Patents
(86) Internationale Anmeldenummer: PCT/EP2011/070477
(87) Internationale Veröffentlichungsnummer: WO 2012/069383

(56) Entgegenhaltungen:
- WO-A1-2004/020497
- DE-A1-102009 029 286

## Beschreibung

Die vorliegende Erfindung betrifft ein Verfahren zur Herstellung von Polyricinolsäureester-Polyolen mit primären Hydroxyl-Endgruppen. Sie betrifft weiterhin erfindungsgemäß erhältliche Polyricinolsäureester-Polyole sowie mit diesen Polyolen hergestellte Polyurethan-Polymere.

Polyricinolsäureester werden technisch durch Polykondensation der Ricinolsäure erhalten. Diese Reaktion verläuft im Vergleich zur Veresterung von beispielsweise Adipinsäure und di-primären Hydroxylkomponenten langsam und ist daher wirtschaftlich nachteilig. Zum Ausgleich der stoffbedingten Minderfunktionalität an Hydroxylgruppen kann bei der Synthese der Polyricinolsäureester als weitere Komponente ein niedermolekulares Polyol wie Hexandiol zugesetzt werden, um letztlich den Überschuss an Hydroxyl- über die Carboxylgruppen sicherzustellen.

Die sekundäre OH-Gruppe der Ricinolsäure fungiert auch als Endgruppe der Polyricinolsäureester. Sie zeichnet sich bei der Verwendung in Polyurethan- (PUR-) Systemen wiederum dadurch aus, dass sie gegenüber NCO-Gruppen wenig reaktiv ist und daher der Einbau von Polyricinolat-Struktureinheiten in die PUR-Matrix nur unvollständig erfolgen kann. Dieses kann beispielsweise zu Ausblühungen oder auch zu fettigen Oberflächen in PUR-Bauteilen führen.

Daneben weisen konventionelle Polyricinolsäureester vergleichsweise hohe Säurezahlen, zum Beispiel 2 mg KOH/g bis 5 mg KOH/g, auf. Freie Säuregruppen sind jedoch dazu geeignet, das Hydrolyseverhalten insbesondere von Polyester-basierten Polyurethanen zu verschlechtern. Daher werden sie oft mit teils kostspieligen Säuregruppen bindenden Zusatzmitteln wie Carbodiimiden abgefangen.

Die Funktionalisierung von Carboxylgruppen bei der Polyester-Polyolsynthese wird in DE 36 13 875 A1 offenbart. Zur Herstellung von Polyester-Polyolen mit einer Säurezahl von kleiner als 1, einer Hydroxylzahl von ungefähr 20 bis ungefähr 400 und einer Funktionalität von zweckmäßigerweise 2 bis 3 werden Polycarbonsäuren und/oder deren Anhydride und mehrwertige Alkohole kondensiert. Dieses geschieht vorteilhafterweise in Abwesenheit von üblichen Veresterungskatalysatoren bei Temperaturen von 150 °C bis 250 °C und gegebenenfalls unter vermindertem Druck. Es wird bis zu einer Säurezahl von 20 bis 5 polykondensiert und die erhaltenen Polykondensate danach pro Carboxylgruppe mit 1 bis 5 Mol Alkylenoxid, zum Beispiel 1,2-Propylenoxid und/oder vorzugsweise Ethylenoxid, in Gegenwart eines tertiären Amins alkoxyliert. Das tertiäre Amin ist ausgewählt aus der Gruppe N-Methylimidazol, Diazabicyclo-[2,2,2]octan, Diazabicyclo[5,4,0]undec-7-en und Pentamethyl-diethylen-triamin. Der Katalysator wird zweckmäßigerweise in einer Menge von 0,001 bis 1,0 Gewichts-%, bezogen auf das Polykondensatgewicht, eingesetzt. Vorteilhafterweise wird bei Temperaturen von 100 °C bis 170 °C und unter einem Druck von 1 bis 10 bar alkoxyliert. Zu alkoxylierende Polyester basieren jedoch auf Polycarbonsäuren und nicht auf Monocarbonsäuren.

US 4,487,853 offenbart ein Verfahren zur Herstellung eines Polyetherester-Polyols mit einem hohen Gehalt an primären Hydroxylgruppen. Hierbei werden bei einer Temperatur von 50 °C bis 125 °C zur Reaktion gebracht: a) ein Kondensat eines Polyols mit 2 bis 8 Hydroxylgruppen und einem Äquivalentgewicht von 30 bis 45 und eines Alkylenoxids mit 2 bis 4 Kohlenstoffatomen und deren Mischungen, wobei das Kondensat ein Äquivalentgewicht von 500 bis 10000 aufweist und das Kondensat mit einem zyklischen organischen Anhydrid zu einem Halbester umgesetzt wird; und b) Ethylenoxid in Gegenwart einer wirksamen Menge eines Amins, Oxids oder Salzes eines zweiwertigen Metallkations, wobei das Verhältnis der Äquivalente des Anhydrids zu den Äquivalenten des Kondensats von etwa 1:1 bis etwa 1:2 beträgt und wobei das Molverhältnis von Ethylenoxid zu Anhydrid im Bereich von etwa 2:1 bis etwa 1,5:1 liegt.

Aufgabe der vorliegenden Erfindung war es, ein Verfahren zur Herstellung von Polyricinolsäureester-Polyolen mit primären Hydroxylgruppen bereitzustellen, welches eine schnelle Reaktionsdurchführung ermöglicht und wobei die erhaltenen Polyricinolsäureester-Polyole nicht mit Säuregruppen bindenden Zusatzstoffen nachbehandelt werden müssen.

Überraschend wurde gefunden, dass die zuvor genannten Aufgaben gelöst wird durch ein Verfahren zur Herstellung von Polyricinolsäureester-Polyolen mit primären Hydroxyl-Endgruppen, umfassend die Schritte:
a) Polykondensation von Ricinolsäure, bis eine Hydroxylzahl von > 0 mg KOH/g bis ≤ 60 mg KOH/g erreicht wird;
b) Reaktion des in Schritt a) erhaltenen Produkts oder eines Carboxylgruppen umfassenden Folgeprodukts des in Schritt a) erhaltenen Produkts mit einem Epoxid der allgemeinen Formel (1): 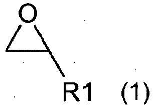 wobei R1 für Wasserstoff, einen Alkylrest oder einen Arylrest steht, mit der Maßgabe, dass > 80 Gewichts-% bis ≤ 100 Gewichts-%, bezogen auf die Gesamtmenge des eingesetzten Epoxids (1), Ethylenoxid sind und
wobei diese Reaktion in Gegenwart eines Amins als Katalysator durchgeführt wird.

Gegenstand der Erfindung sind auch die nach dem erfindungsgemäßen Verfahren erhältlichen Polyricinolsäureester-Polyole (im Folgenden auch als Komponente A2 bezeichnet).

Im erfindungsgemäßen Verfahren wird die Ricinolsäure nur so lange polykondensiert, bis sich die Reaktion aufgrund abnehmender Konzentration an OH- und COOH-Gruppen verlangsamt. Die verbleibenden COOH-Gruppen in dem Polyricinolsäureester oder in einem Folgeprodukt hiervon werden unter Katalyse durch einen Aminkatalysator in schneller Reaktion mit dem Epoxid (1) umgesetzt. Die vor der Reaktion mit dem Epoxid noch nicht veresterten OH-Gruppen der Ricinolsäure verbleiben als sekundäre OH-Endgruppen im Reaktionsprodukt. Wenn Ricinolsäure in technischer Qualität mit einem Überschuss an COOH-Gruppen als Ausgangsprodukt eingesetzt wird, enthält dieses Reaktionsprodukt mit dem Epoxid (1) dennoch überwiegend primäre OH-Endgruppen.

Im erfindungsgemäßen Verfahren können beispielsweise als Produkte Polyricinolsäureester-Polyole mit etwa 80 mol-% an primären Hydroxyl-Endgruppen erhalten werden. Es ist nicht bekannt, dass derartig hohe Werte durch andere Verfahren erhalten werden können. Die Säurezahlen der Produkte liegen bei ≤ 1 mg KOH/g. So können sie zum Beispiel > 0 mg KOH/g bis ≤ 0,1 mg KOH/g, bestimmt gemäß DIN 53402, betragen. Die Hydroxylzahlen der Produkte gemäß DIN 53240 können beispielsweise > 20 mg KOH/g bis ≤ 100 mg KOH/g betragen. Technisch werden für vergleichbare Endprodukte, das heißt für auf Ricinolsäure basierende Polyole mit Säurezahlen im Bereich von 0 bis 5 mg KOH/g, Reaktionszeiten jenseits von 80 Stunden benötigt. Nach dem erfindungsgemäßen Verfahren sind Reaktionszeiten von unter 30 Stunden erreichbar.

Das erfindungsgemäße Verfahren geht von der Ricinolsäure aus. Folglich wird die verbesserte technische Nutzung eines nachwachsenden Rohstoffs ermöglicht.

Die Polykondensation in Schritt a) erfolgt bevorzugt ohne Katalysator, kann aber auch durch die dem Fachmann bekannten Katalysatoren katalysiert werden. Die Polykondensation kann nach geläufigen Methoden, zum Beispiel bei erhöhter Temperatur, im Vakuum, als Azeotropveresterung und nach dem Stickstoffblasverfahren durchgeführt werden. Beispielsweise kann die Reaktionstemperatur ≥ 180 °C bis ≤ 220 °C betragen.

Man lässt die Kondensation in Schritt a) so lange ablaufen, bis das Reaktionsgemisch eine Hydroxylzahl von > 0 mg KOH/g bis ≤ 60 mg KOH/g, vorzugsweise > 1 mg KOH/g bis ≤ 55 mg KOH/g und mehr bevorzugt ≥ 8 mg KOH/g bis ≤ 55 mg KOH/g erreicht. Die Hydroxylzahl lässt sich gemäß DIN 53240 bestimmen. Die Reaktion in Schritt a) kann durch regelmäßige Probenentnahme hinsichtlich der Hydroxylzahl überwacht werden.

In Schritt b) wird das Reaktionsprodukt aus Schritt a), bei dem es sich um einen Polyricinolsäureester handeln kann, mit einem Epoxid (1) umgesetzt. Eine weitere Möglichkeit ist, dass ein Folgeprodukt der Polykondensation aus Schritt a) umgesetzt wird. Solche Folgeprodukte oder Derivate erhält man durch Reaktion eines Polyricinolsäureesters aus Schritt a) mit weiteren Verbindungen. Wichtig ist hierbei, dass die Folgeprodukte noch Carboxylgruppen umfassen. Diese Carboxylgruppen reagieren dann mit dem Epoxid (1).

Das Epoxid der allgemeinen Formel (1) ist ein terminales Epoxid mit einem Substituenten R1, welcher Wasserstoff, ein Alkylrest oder ein Arylrest sein kann. Der Begriff "Alkyl" umfasst allgemein im Zusammenhang der gesamten Erfindung Substituenten aus der Gruppe n-Alkyl wie Methyl, Ethyl oder Propyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten wie Phenyl und/oder mehrkernige Carbo- oder Heteroarylsubstituenten. Erfindungsgemäß ist vorgesehen, dass ≥ 80 Gewichts-% bis ≤ 1.00 Gewichts-%, bezogen auf die Gesamtmenge des eingesetzten Epoxids (1), Ethylenoxid sind. Auf diese Weise erhält man einen gewünschten hohen Anteil an primären Hydroxylgruppen. Der Gewichtsanteil kann auch ≥ 90 Gewichts-% bis ≤ 99,5 Gewichts-% oder ≥ 95 Gewichts-% bis ≤ 99 Gewichts-% betragen. Das molare Verhältnis von Epoxid zu Carboxyl-Endgruppe im erfindungsgemäßen Verfahren kann beispielsweise in einem Bereich von ≥ 0,9:1 bis ≤ 10:1, bevorzugt von ≥ 0,95:1 bis ≤ 5:1 und mehr bevorzugt von ≥ 0,98:1 bis ≤ 3:1 liegen.

Die Reaktion der Polyestercarboxylate mit dem Epoxid erfolgt in Gegenwart eines Amins, vorzugsweise eines tertiären Amins, als Katalysator. Die Menge des Katalysators, bezogen auf die Gesamtmasse des Reaktionsansatzes, kann beispielsweise > 10 ppm bis ≤ 10000 ppm, bevorzugt ≥ 50 ppm bis ≤ 5000 ppm und mehr bevorzugt ≥ 100 ppm bis ≤ 2000 ppm betragen.

In einer Ausführungsform des erfindungsgemäßen Verfahrens umfasst dieses weiterhin zwischen Schritt a) und Schritt b) den Schritt:
a1) Reaktion des in Schritt a) erhaltenen Produkts mit einem zyklischen Carbonsäureanhydrid.
Hierbei ist dann das Reaktionsprodukt aus Schritt a1) das in Schritt b) erwähnte Carboxylgruppen umfassende Folgeprodukt des Reaktionsprodukts aus Schritt a). Vorteilhafterweise wird ein Polyricinolsäureester aus Schritt a) mit einer äquivalenten Menge des Anhydrids umgesetzt. Man erhält zum Beispiel im Falle des Phthalsäureanhydrids einen Polyester, der sowohl aliphatische als auch aromatische COOH-Endgruppen aufweist. Beide Arten an COOH-Endgruppen reagieren in Schritt b) unter Aminkatalyse in schneller Reaktion mit dem Epoxid (1), wobei das so erhaltene Endprodukt noch höhere Anteile an primären OH-Gruppen aufweisen kann als das in einer zweistufigen Reaktion erhaltene. Beispielsweise kann gemäß dieser Variante der Anteil an primären Hydroxylgruppen über 80 mol-% betragen.

Vorzugsweise ist hierbei das in Schritt a1) eingesetzte zyklische Carbonsäureanhydrid ausgewählt aus der Gruppe umfassend Phthalsäureanhydrid, Tetrahydrophthalsäureanhydrid, Bernsteinsäureanhydrid und/oder Maleinsäureanhydrid.

In einer weiteren Ausführungsform des erfindungsgemäßen Verfahrens ist in Schritt b) das Epoxid der allgemeinen Formel (1) Ethylenoxid. Hierdurch lassen sich die höchsten Anteile an primären Hydroxylgruppen im Endprodukt erhalten.

In einer weiteren Ausführungsform des erfindungsgemäßen Verfahrens ist der Katalysator in Schritt b) ausgewählt aus der Gruppe umfassend:
(A1) Amine der allgemeinen Formel (2): 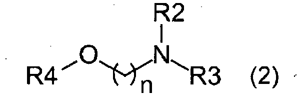 wobei gilt:
   R2 und R3 sind unabhängig voneinander Wasserstoff, Alkyl oder Aryl; oder
   R2 und R3 bilden gemeinsam mit dem sie tragenden N-Atom einen aliphatischen, ungesättigten oder aromatischen Heterozyklus;
   n ist eine ganze Zahl von 1 bis 10;
   R4 ist Wasserstoff, Alkyl oder Aryl; oder
   R4 steht für -(CH₂)ₓ-N(R41)(R42), wobei gilt:
      R41 und R42 sind unabhängig voneinander Wasserstoff, Alkyl oder Aryl; oder
      R41 und R42 bilden gemeinsam mit dem sie tragenden N-Atom einen aliphatischen, ungesättigten oder aromatischen Heterozyklus;
      x ist eine ganze Zahl von 1 bis 10;
(B1) Amine der allgemeinen Formel (3): 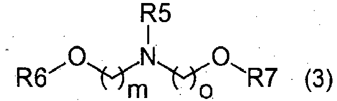 wobei gilt:
   R5 ist Wasserstoff, Alkyl oder Aryl;
   R6 und R7 sind unabhängig voneinander Wasserstoff, Alkyl oder Aryl;
   m und o sind unabhängig voneinander eine ganze Zahl von 1 bis 10;
      und/oder:
(C1) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Amine der allgemeinen Formel (2) können im weitesten Sinne als Aminoalkohole oder deren Ether beschrieben werden. Ist R4 Wasserstoff, so sind die Katalysatoren in eine Polyurethanmatrix einbaubar, wenn das erfindungsgemäße Polyol mit einem Polyisocyanat umgesetzt wird. Dieses ist vorteilhaft, um das Austreten des Katalysators, der im Falle von Aminen mit nachteiligen Geruchsproblemen einhergehen kann, an die Polyurethanoberfläche, die sogenannte "fogging"- oder VOC (volatile organic compounds)-Problematik, zu verhindern.

Amine der allgemeinen Formel (3) können im weitesten Sinne als Amino(bis)alkohole oder deren Ether beschrieben werden. Sind R6 oder R7 Wasserstoff, so sind diese Katalysatoren ebenfalls in eine Polyurethanmatrix einbaubar.

Vorzugsweise gilt hierbei, dass in dem Amin der allgemeinen Formel (2) R2 und R3 Methyl sind, R4 Wasserstoff ist und n = 2 ist oder aber R2 und R3 Methyl sind, R4 -(CH₂)₂-N(CH₃)₂ ist und n = 2 ist. Insgesamt ergibt sich also entweder N,N-Dimethylethanolamin oder Bis(2-(dimethylamino)ethyl)ether.

Weiterhin ist bevorzugt, dass in dem Amin der allgemeinen Formel (3) R5 Methyl ist, R6 und R7 Wasserstoff sind, m = 2 ist und o = 2 ist. Insgesamt ergibt sich also N-Methyldiethanolamin.

In einer weiteren Ausführungsform des erfindungsgemäßen Verfahrens findet in Schritt b) die Reaktion mit dem Epoxid der allgemeinen Formel (1) bei einer Temperatur von ≥ 70 °C bis ≤ 150 °C statt. Die Reaktionstemperatur kann vorzugsweise > 80 °C bis ≤ 130 °C betragen.

Ein weiterer Gegenstand der vorliegenden Erfindung ist ein Polyricinolsäureester-Polyol mit primären Hydroxyl-Endgruppen, erhältlich durch ein erfindungsgemäßes Verfahren. Solch ein Polyol kann vorzugsweise eine zahlenmittlere Molekülmasse von ≥ 1000 g/mol bis ≤ 10000 g/mol aufweisen.

Dieses Polyol kann beispielsweise auf Ricinolsäure und einem Alkylenoxid C₂H₃R8O mit R8 = Wasserstoff, also auf Ricinolsäure und Ethylenoxid, basieren. Beispielsweise können pro Mol des Polyols ≥ 1 mol bis ≤ 5 mol Alkylenoxid, vorzugsweise Ethylenoxid, eingebaut sein. Ohne auf eine Theorie festgelegt zu sein, kann bei einem Einbau von einer Ethylenoxid-Einheit je Carboxylgruppe die folgende idealisierte Formel (4a) angenommen werden:

HO-CH₂-CH₂-O-(O)C-[Polyricinolsäureester]-OH (4a)

Es ist auch möglich, dass dieses Polyol auf Ricinolsäure, Phthalsäureanhydrid und einem Alkylenoxid C₂H₃R8O mit R8 = Wasserstoff, also auf Ricinolsäure, Phthalsäureanhydrid und Ethylenoxid, basiert. Ohne auf eine Theorie festgelegt zu sein, kann bei einem Einbau von einer Ethylenoxid-Einheit je Carboxylgruppe die folgende idealisierte Formel (4b) angenommen werden:

HO-CH₂-CH₂-O-C(O)-C₆H₄-C(O)-O-c[Polyricinolsäureester]-C(O)-O-CH₂-CH₂-OH (4b)

In einer Ausführungsform weist das erfindungsgemäße Polyricinolsäureester-Polyol einen Gehalt an primären Hydroxyl-Endgruppen von ≥ 55 mol-% bis ≤ 95 mol-% auf. Hierunter ist der molare Anteil in dem Polyol insgesamt, also nicht auf ein einzelnes Molekül bezogen, zu verstehen. Er lässt sich zum Beispiel mittels ¹H-NMR-Spektroskopie bestimmen. Der Anteil kann auch ≥ 58 mol-% bis ≤ 90 mol-% oder ≥ 60 mol-% bis ≤ 85 mol-% betragen.

In einer weiteren Ausführungsform weist das erfindungsgemäße Polyricinolsäureester-Polyol eine Säurezahl von ≥ 0 mg KOH/g bis ≤ 1 mg KOH/g auf. Die Säurezahl lässt sich anhand der Norm DIN 53402 bestimmen und kann auch ≥ 0,01 mg KOH/g bis ≤ 0,07 mg KOH/g betragen. Unabhängig davon kann die Hydroxylzahl der erfindungsgemäßen Polyole gemäß DIN 53240 beispielsweise ≥ 20 mg KOH/g bis ≤ 100 mg KOH/g betragen.

Weiterhin kann das erfindungsgemäße Polyricinolsäureester-Polyol eine Viskosität bei 25 °C von > 500 mPas bis ≤ 6000 mPas aufweisen. Diese Viskosität kann mittels der Norm DIN EN ISO 3219:10194 bestimmt werden und kann auch in einem Bereich von ≥ 1000 mPas bis ≤ 4000 mPas oder von ≥ 1400 mPas bis ≤ 2000 mPas liegen. Solche Viskositätsbereiche ergeben eine bessere Verarbeitbarkeit des Polyols.

In einer weiteren Ausführungsform liegt das erfindungsgemäße Polyricinolsäureester-Polyol in Form einer Zusammensetzung vor, die als weiteren Bestandteil umfasst:
(A2) Amine der allgemeinen Formel (5): 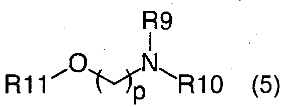 wobei gilt:
   R9 und R10 sind unabhängig voneinander Wasserstoff, Alkyl oder Aryl; oder
   R9 und R10 bilden gemeinsam mit dem sie tragenden N-Atom einen aliphatischen,
   ungesättigten oder aromatischen Heterozyklus;
   p ist eine ganze Zahl von 1 bis 10;
   R11 ist Wasserstoff, Alkyl oder Aryl; oder
   R11 steht für -(CH₂)_{y}-N(R12)(R13), wobei gilt:
      R12 und R13 sind unabhängig voneinander Wasserstoff, Alkyl oder Aryl; oder
      R12 und R13 bilden gemeinsam mit dem sie tragenden N-Atom einen aliphatischen,
      ungesättigten oder aromatischen Heterozyklus;
      y ist eine ganze Zahl von 1 bis 10;
(B2) Amine der allgemeinen Formel (6): 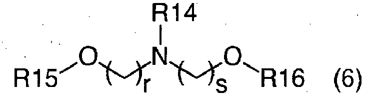 wobei gilt:
   R14 ist Wasserstoff, Alkyl oder Aryl;
   R15 und R16 sind unabhängig voneinander Wasserstoff, Alkyl oder Aryl;
   r und s sind unabhängig voneinander eine ganze Zahl von 1 bis 10;
   und/oder:
(C2) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

Solche Verbindungen aus den Gruppen (A2), (B2) und (C2) können in bestimmten Varianten auch als sogenannte Treibkatalysatoren verwendet werden, das heißt, sie katalysieren bevorzugt die Reaktion von Isocyanatgruppen mit Wasser unter Bildung von Kohlendioxid, in geringerem Ausmaß auch deren Reaktion mit Hydroxylgruppen unter Bildung von Urethangruppen. Daher kann diese Zusammensetzung unmittelbar weiter in der Herstellung von Polyurethanen eingesetzt werden. Bevorzugt sind N,N-Dimethylethanolamin, Bis(2-(dimethylamino)ethyl)ether, Diazabicyclo[2.2.2]octan oder N-Methyldiethanolamin. Die Menge dieser Verbindungen (A2), (B2) und/oder (C2) kann relativ zum erfindungsgemäßen Polyol beispielsweise ≥ 10 ppm bis ≤ 10000 ppm, bevorzugt ≥ 50 ppm bis ≤ 5000 ppm und mehr bevorzugt ≥ 100 ppm bis ≤ 2000 ppm betragen.

Ein weiterer Gegenstand der vorliegenden Erfindung ist ein Polyurethanpolymer, erhältlich aus der Reaktion eines erfindungsgemäßen Polyricinolsäureester-Polyols mit einem Polyisocyanat.

Geeignete Polyisocyanate (Komponente B) sind aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel (7)

Q(NCO)ₙ, (7)

in der
n = 2 - 4, vorzugsweise 2 - 3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstöffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Die Urethangruppen-haltige Polyisocyanate (Prepolymere) können beispielsweise Reaktionsprodukte der Polyisocyanate mit erfindungsgemäßen Polyricinolsäureester-Polyolen oder aber beliebigen anderen Polyolen (beispielsweise den konventionellen Polyolen) sein. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt, besonders bevorzugt wird als Polyisocyanat eine Mischung enthaltend 4,4'-Diphenylmethandiisocyanat und 2,4'-Diphenylmethandiisocyanat und Polyphenylpolymethylenpolyisocyanat eingesetzt.

Die Kennzahl (Isocyanat Index) gibt das prozentuale Verhältnis der tatsächlich eingesetzten IsocyanatMenge zur stöchiometrischen, d.h. für die Umsetzung der OH-Äquivalente berechnete Menge an Isocyanat-Gruppen (NCO)-Menge an. Im Reaktionsgemisch, aus dem das Polyurethanpolymer erhalten wird, kann die Kennzahl, von NCO-Äquivalenten zu OH-Äquivalenten, in einem Bereich von beispielsweise 50 bis 250, bevorzugt 70 bis 130, besonders bevorzugt 75 bis 115 liegen.

Die Erfindung betrifft ebenfalls ein Polyurethanpolymer, erhältlich aus der Reaktion eines Polyricinolsäureester-Polyols, welches in Form einer als weitere Bestandteile die vorstehend erwähnten Verbindungen der Gruppen (A2), (B2) und/oder (C2) umfassenden Zusammensetzung vorliegt, mit einem Polyisocyanat.

In einer Ausführungsform liegt das erfindungsgemäße Polyurethanpolymer als Polyurethan-Weichschaum vor. Polyurethan-Weichschäurne in Sinne der vorliegenden Erfindung sind solche Polyurethan-Polymere und insbesondere Schäume, deren Rohdichte gemäß DIN EN ISO 3386-1-98 im Bereich von ≥ 10 kg/m³ bis ≤ 150 kg/m³ liegt und deren Stauchhärte gemäß DIN EN ISO 3386-1-98 im Bereich von ≥ 0,5 kPa bis ≤ 20 kPa (bei 40% Verformung) liegt.

Gegenstand der Erfindung ist somit auch die Herstellung von Polyurethanweichschaumstoffen mit einer Rohdichte gemäß DIN EN ISO 3386-1-98 im Bereich von ≥ 10 kg/m³ bis ≤ 150 kg/m³, vorzugsweise von ≥ 20 kg/m³ bis ≤ 70 kg/m³ und einer Stauchhärte gemäß DIN EN ISO 3386-1-98 im Bereich von ≥ 0,5 kPa bis ≤ 20 kPa (bei 40% Verformung und 4. Zyklus) durch Umsetzung von Komponente A (Polyolformulierung) enthaltend
A1 50 bis 95 Gew.-Teile, bevorzugt 50 bis 80 Gew.-Teile (bezogen auf die Summe der Gew.-Teile der Komponenten A1 und A2) konventionelles Polyetherpolyol,
A2 5 bis 50 Gew.-Teile, bevorzugt 20 bis 50 Gew.-Teile (bezogen auf die Summe der Gew.-Teile der Komponenten A1 und A2) Polyricinolsäureester mit einer Hydroxylzahl von 30 mg KOH/g bis 80 mg KOH/g, bevorzugt von ≥ 40 mg KOH/g bis ≤ 60 mg KOH/g, bsonders bevorzugt von ≥ 45 mg KOH/g bis ≤ 50 mg KOH/g und einer Säurezahl von ≥ 5 mg KOH/g bis ≤ 50 mg KOH/g, bevorzugt ≥ 5,2 mg KOH/g bis ≤ 20 mg KOH/g, besonders bevorzugt von ≥ 5,4 mg KOH/g bis ≤ 10 mg KOH/g,
A3 0,5 bis 25 Gew.-Teile, bevorzugt 2 bis 5 Gew.-Teile (bezogen auf die Summe der Gew.-Teile der Komponenten A1 und A2) Wasser und/oder physikalische Treibmittel,
A4 0,05 bis 10 Gew.-Teile, bevorzugt 0,2 bis 4 Gew.-Teile (bezogen auf die Summe der Gew.-Teile der Komponenten A1 und A2) Hilfs- und Zusatzstoffe wie
   a) Katalysatoren,
   b) oberflächenaktive Zusatzstoffe,
   c) Pigmente oder Flammschutzmittel,
A5 0 bis 10 Gew.-Teile, bevorzugt 0 bis 5 Gew.-Teile (bezogen auf die Summe der Gew.-Teile der Komponenten A1 und A2) gegenüber Isocyanaten reaktionsfähigen Wasserstoffatomen aufweisenden Verbindungen mit einem Molekulargewicht von 62 - 399,
mit Komponente B enthaltend Polyisocyanate,
wobei die Herstellung bei einer Kennzahl von 50 bis 250, bevorzugt 70 bis 130, besonders bevorzugt 75 bis 115 erfolgt, und
wobei alle Gewichtsteilangaben der Komponenten A1 bis A5 in der vorliegenden Anmeldung so normiert sind, dass die Summe der Gewichtsteile der Komponenten A1+A2 in der Zusammensetzung 100 ergibt.

Die Komponenten A2 und B wurden zuvor erläutert.

### Komponente A.1

Unter konventionellen Polyetherpolyolen (Komponente A1) im Sinne der Erfindung werden Verbindungen bezeichnet, die Alkylenoxidadditionsprodukte von Starterverbindungen mit zerewitinoffaktiven Wasserstoffatomen, also Polyetherpolyole mit einer Hydroxylzahl gemäß DIN 53240 von ≥ 15 mg KOH/g bis ≤ 80 mg KOH/g, vorzugweise von ≥ 20 mg KOH/g bis ≤ 60 mg KOH/g sind.Beispiele für solche Polyole sind dem Fachmann bekannt. Sie können eine Hydroxylzahl gemäß DIN 53240 von ≥ 15 mg KOH/g bis ≤ 80 mg KOH/g, vorzugweise von ≥ 20 mg KOH/g bis ≤ 60 mg KOH/g aufweisen. Für die konventionellen Polyetherpolyole eingesetzte Starterverbindungen mit zerewitinoffaktiven Wasserstoffatomen weisen meist Funktionalitäten von 2 bis 6 auf, bevorzugt von 3 bis 6, besonders bevorzugt von 3, und vorzugsweise sind die Starterverbindungen hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff,. Vorzugsweise wird als Starterverbindung Glycerin und/oder Trimethylolpropan eingesetzt. Der Einsatz solcher konventioneller trifunktioneller Polyole basierend auf einer Starterverbindung mit einer Funktionalität von 3 bis 6 vermeidet die Nachteile, die bifunktionelle Polyolen aufweisen, etwa schlechte Verformungswerte (Druckverformungsrest). Besonders bevorzugt sind konventionelle Polyetherpolyole basierend auf einer Starterverbindung mit einer Funktionalität von 3, da diese auch, ebenso wie die Nachteile vermeiden, die von höherfunktionellen Polyolen wie zum Beispiel tetrafunktionellen Polyolen ausgehen, wie deren schlechtere Bruchdehnung mechanische Werte.

Geeignete Alkylenoxide sind beispielsweise Ethylenoxid, Propylenoxid, 1,2-Butylenoxid bzw. 2,3-Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

### Komponente A3

Als Komponente A3 werden Wasser und/oder physikalische Treibmittel eingesetzt. Als physikalische Treibmittel werden beispielsweise Kohlendioxid und/oder leicht flüchtige organische Substanzen als Treibmittel eingesetzt.

### Komponente A4

### Als Komponente A4 werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesodere solche mit niedriger Emission wie beispielsweise Produkte der Tegostab^{®} LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren gemäß Komponente A4 a) werden bevorzugt aliphatische tertiäre Amine (beispielsweise-Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N , N , N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren gemäß Komponente A4 a) werden besonders bevorzugt
α) Harnstoff, Derivate des Harnstoffs und/oder
β) amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren gemäß Komponente A4 a) seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

### Komponente A5

Gegebenenfalls werden als Komponente A5 Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A5 Ethanolamin, Diethanolamin, Triethanolamin, Sorbit und/oder Glycerin eingesetzt werden. Weitere Beispiele für Verbindungen gemäß Komponente A5 werden in EP-A 0 007 502, Seiten 16 - 17, beschrieben.

Die vorliegende Erfindung wird anhand der nachfolgenden Beispiele weiter erläutert. Hierbei haben die verwendeten Materialien und Abkürzungen die folgende Bedeutung und Bezugsquellen:
Ricinolsäure: Oleo Chemie
Phthalsäureanhydrid (PSA): Lanxess GmbH, Deutschland
2,2,2-Diazabicyclooctan: Aldrich
N,N-Dimethylethanolamin (DMEA): Aldrich
N-Methyldiethanolamin (MDEA): Aldrich
DABCO^{®} (Triethylendiamin, Diazabicyclo[2.2.2]octan): Aldrich

| | |
|---|---|
| MDI: | Mischung enthaltend 62 Gew.-% 4,4'-Diphenylmethandiisocyanat, 8 Gew.-% 2,4'-Diphenylmethandiisocyanat und 30 Gew.-% Mehrkern-MDI mit einem NCO-Gehalt von 32,1 Gewichts-% |
| PET: | Polyetherpolyol mit einer OH-Zahl von ca. 28 mg KOH/g, hergestellt durch Addition von Propylenoxid und Ethylenoxid im Verhältnis 85 zu 15 unter Verwendung von Glycerin als Starter mit ca. 85 mol% primären OH-Gruppen. |

Tegostab^{®} B 8681: Zubereitung organo-modifizierter Polysiloxane, Firma Evonik
Addocat^{®} 105: Aminkatalysator der Firma Rheinchemie
Addocat^{®} 108: Aminkatalysator der Firma Rheinchemie
Addocat^{®} SO: Zinnkatalysator der Firma Rheinchemie

Die Analysen wurden wie folgt durchgeführt:

Dynamische Viskosität: Rheometer MCR 51 der Firma Anton Paar entsprechend DIN 53019 mit einem Messkegel CP 50-1 (Durchmesser 50 mm, Winkel 1°) bei Scherraten von 25, 100, 200 und 500 s⁻¹. Die Polyricinolate zeigen von der Scherrate unabhängige Viskositäten.

Verhältnis der primären und sekundären OH-Gruppen: mittels ¹³C-NMR (Bruker DPX 400, Deuterochloroform als Lösungsmittel): Die relevanten Resonanzen im ¹³C-NMR (bezogen auf TMS = 0 ppm) wurden wie folgt zugeordnet: Resonanz bei 61,1 ppm primäre OH-Gruppen des Polyricinolsäureester-Polyols, Resonanz bei sekundäre 71,5 ppm sekundäre OH-Gruppen des Polyricinolsäureester-Polyols.

| | |
|---|---|
| Hydroxylzahl: | anhand der Norm DIN 53240 |
| Säurezahl: | anhand der Norm DIN 53402 |

### A-1) und A-2): Herstellung von Polyricinolat-Vorstufen

### Beispiel A-1 :

In einem 4-Liter 4-Halskolben, ausgestattet mit Heizpilz, mechanischem Rührwerk, Innenthermometer, Kolonne, Rückflussteiler mit Thermometer, absteigendem Kühler und Vorlage wurden 2200 g (ca. 6,8 Mol) Ricinolsäure unter Stickstoffüberschleierung auf 200 °C erhitzt. Man destillierte für 3 Stunden unter Normaldruck Wasser ab, legte langsam innerhalb einer Stunde Vakuum auf zuletzt 15 mbar an und vervollständigte die Reaktion für weitere 20 Stunden und bestimmte folgende Eigenschaften:

Analyse des Polyricinolates A-1:

| | |
|---|---|
| Hydroxylzahl: | 10,5 mg KOH/g |
| Säurezahl: | 29,4 mg KOH/g |
| Viskosität: | 210 mPas (75 °C), 2140 mPas (25 °C) |

### Beispiel A-2:

In einem 4-Liter 4-Halskolben, ausgestattet mit Heizpilz, mechanischem Rührwerk, Innenthermometer, Kolonne, Rückflussteiler mit Thermometer, absteigendem Kühler und Vorlage wurden 2200 g (ca. 6,8 Mol) Ricinolsäure unter Stickstoffüberschleierung auf 200 °C erhitzt. Man destillierte für 3 Stunden unter Normaldruck Wasser ab, legte langsam innerhalb einer Stunde Vakuum auf zuletzt 15 mbar an und vervollständigte die Reaktion für weitere 20 Stunden und bestimmte folgende Eigenschaften:
Analyse des Polyricinolates (Zwischenprodukt):

| | |
|---|---|
| Hydroxylzahl: | 9,4 mg KOH/g |
| Säurezahl: | 30,2 mg KOH/g |

Bei 140 °C gab man 51 g (0,345 Mol) Phthalsäureanhydrid zur Reaktionsmischung. Man rührte für eine Stunde und bestimmte folgende Eigenschaften:
Analyse des resultierenden Polyricinolates A-2:

| | |
|---|---|
| Hydroxylzahl: | 1,4 mg KOH/g |
| Säurezahl: | 37,9 mg KOH/g |
| Viskosität: | 210 mPas (75 °C), 2150 mPas (25 °C) |

Die nachfolgende Tabelle 1 fasst die Beispiele A-1 und A-2 zusammen:

**Tabelle 1**

| Beispiel | | **A-1** | **A-2** |
|---|---|---|---|
| Ricinolsäure | [g] | 2200 | 2200 |
| | [mol] | 6,8 | 6,8 |
| Reaktionszeit | [Std] | 24 | 24 |
| | | | |

| Zwischenprodukt: | | | |
|---|---|---|---|
| OH-Zahl | [mg KOH/g] | - - | 9,4 |
| Säurezahl | [mg KOH/g] | - - | 30,2 |
| Phthalsäureanhydrid | [g] | - - | 51 |
| | [mol] | - - | 0,345 |
| Reaktionszeit | [Std] | - - | 1 |
| | | | |

| Endprodukt: | | | |
|---|---|---|---|
| OH-Zahl | [mg KOH/g] | 10,5 | 1,4 |
| Säurezahl | [mg KOH/g] | 29,4 | 37,9 |

### A-3V: Herstellung des Polyricinolsäureesters A-3V (Vergleichsbeispiel):

In einen 16000-Liter Rührwerkskessel mit Destillationskolonnen und aufgesetztem Dephlegmator wurden 13000 kg Ricinolsäure und 650 kg Hexandiol eingezogen und unter und Rühren auf 200 °C erhitzt. Während der Aufheizphase wurde Reaktionswasser unter Normaldruck abdestilliert. Bei Erreichen der Reaktionstemperatur wurde Vakuum angelegt. Der Druck wurde innerhalb einer Stunde auf 20 mbar abgesenkt. Währenddessen wurde die Kopftemperatur mittels Regelung der Dephlegmatortemperatur auf dem Niveau der Wassersiedelinie gehalten. Bei einem Druck von 200 mbar gab man nach 3,5 Stunden 320 g einer 28%-igen Lösung an Zinndichlorid (wasserfrei) in Ethylenglykol zu. Gleichzeitig wurde die Dephlegmatortemperatur auf 60 °C fixiert. Im Verlauf der weiteren Reaktion wurde die Säurezahl verfolgt: Die Säurezahl betrug nach einer Reaktionszeit von insgesamt 24 Stunden 10 mg KOH/g, nach 48 Stunden 5 mg KOH/g, nach 72 Stunden 3,5 mg KOH/g und nach 84 Stunden 3,0 mg KOH/g. Nach 84 Stunden Reaktionszeit wurde der Reaktorinhalt auf 130 °C abgekühlt.

### Analyse des resultierenden Polyricinolsäureesters A3-V:

| | |
|---|---|
| Hydroxylzahl: | 37,5 mg KOH/g |
| Säurezahl: | 3,0 mg KOH/g |
| Viskosität: | 850 mPas (25 °C) |

Katalysatorkonzentration: 4 ppm Sn im Endprodukt

### B) Alkoxylierung

### Beispiel B-1 :

In einem 1 l Edelstahldruckreaktor wurden 200 g der Vorstufe A-1 (Säurezahl = 29,4 mg KOH/g; OH-Zahl = 10,5 mg KOH/g) und 0,209 g (1000 ppm, bezogen auf den Gesamtansatz) des AminKatalysators N-Methyl-diethanolamin unter Stickstoff vorgelegt und auf 125 °C aufgeheizt. Dann wurden über einen Zeitraum von 30 min 9,2 g Ethylenoxid bei 125 °C in den Reaktor dosiert. Anschließend wurde bei 125 °C nachreagiert, bis der Druck im Reaktor über einen Zeitraum von 30 min konstant blieb (resultierende Nachreaktionszeit siehe Tabelle 2). Abschließend wurden leichtflüchtige Anteile bei 90 °C für 30 min im Vakuum abdestilliert und das Reaktionsgemisch auf Raumtemperatur abgekühlt.

### Beispiel B-2 und B-3:

Es wurde analog zu Beispiel B-1 verfahren, wobei aber ans Stelle des Amin-Katalysator DABCO (Triethylendiamin) für Beispiel B-2 N,N-Dimethylethanolamin bzw. für Beispiel B-3 Bis(2-dimethylaminoethyl)ether in der angegebenen Menge (1000 ppm) eingesetzt wurde.

Die jeweilige Nachreaktionszeit und die analytischen Daten der Beispiel B-1, B-2 und B-3 gehen aus der nachfolgenden Tabelle 2 hervor.:

**Tabelle 2**

| Beispiel | | **B-1** | **B-2** | **B-3** |
|---|---|---|---|---|
| Vorstufe | | A-1 | A-1 | A-1 |
| Amin-Katalysator | | N-Methyl-diethanolamin | DABCO (Triethylendiamin) | N,N-Dimethylethanolamin |
| Nachreaktionszeit | [min] | 204 | 107 | 113 |
| OH-Zahl | [mg KOH/g] | 43,4 | 39,6 | 44,5 |
| Säurezahl | [mg KOH/g] | 0,02 | 0,05 | 0,01 |
| Viskosität | [mPas, 25°C] | 1671 | 1480 | 1725 |
| Primäre OH-Gruppen | [Mol-%] | 68 | 77 | 58 |

### Beispiel B-4:

In einem 1 l Edelstahldruckreaktor wurden 200 g der Vorstufe A-2 (Säurezahl = 37,9 mg KOH/g; OHZahl = 1,4 mg KOH/g) und 0,212 g (1000 ppm, bezogen auf den Gesamtansatz) Amin-Katalysator DABCO (Triethylendiamin) unter Stickstoff vorgelegt und auf 125 °C aufgeheizt. Dann wurden über einen Zeitraum von 30 min 11,9 g Ethylenoxid bei 125 °C in den Reaktor dosiert. Anschließend wurde bei 125 °C nachreagiert, bis der Druck im Reaktor über einen Zeitraum von 30 min konstant blieb (resultierende Nachreaktionszeit siehe Tabelle 3). Abschließend wurden leichtflüchtige Anteile bei 90 °C 30 min im Vakuum abdestilliert und das Reaktionsgemisch auf Raumtemperatur abgekühlt.

### Beispiel B-5 und B-6:

Es wurde analog zu Beispiel B-4 verfahren, wobei aber ans Stelle des Amin-Katalysator DABCO (Triethylendiamin) für Beispiel B-5 N,N-Dimethylethanolamin bzw. für Beispiel B-6 Bis(2-dimethyl-aminoethyl)ether in der angegebenen Menge (1000 ppm) eingesetzt wurde.

Die jeweilige Nachreaktionszeit und die analytische Daten der Beispiel B-4, B-5 und B-6 gehen aus der nachfolgenden Tabelle 3 hervor.:

**Tabelle 3**

| Beispiel | | **B-4** | **B-5** | **B-6** |
|---|---|---|---|---|
| Vorstufe | | A-2 | A-2 | A-2 |
| Amin- Katalysator | | DABCO (Triethylendiamin) | N,N-Dimethyl-ethanolamin | Bis(2-dimethylaminoethyl)ether |
| Nachreaktionszeit | [min] | 122 | 127 | 128 |
| OH-Zahl | [mg KOH/g] | 38,0 | 37,0 | 39,0 |
| Säurezahl | [mg KOH/g] | 0,03 | 0,06 | 0,03 |
| Viskosität | [mPas, 25 °C] | 2151 | 1627 | 1955 |
| Primäre OH-Gruppen | [Mol-%] | 75 | 84 | 77 |

### C) Herstellung von Polyurethan-Weichschaumstoffen

In für die Herstellung von Polyurethan-Weichblockschaumstoffen üblicher Verarbeitungsweise nach dem Einstufenverfahren werden die in den Beispielen gemäß den nachfolgenden Tabellen 4, 5 und 6 aufgeführten Einsatzstoffe miteinander zur Reaktion gebracht:

**Tabelle 4**

| | Beispiel | | **C-1 (Vergleich)** | **C-2** |
|---|---|---|---|---|
| Formulierung | PET | [Gewichtsteile] | 77,85 | 77,85 |
| | A-3V | [Gewichtsteile] | 19,46 | 0,00 |
| | Polyol aus B-2 | [Gewichtsteile] | 0,00 | 19,46 |
| | Polyol aus B-5 | [Gewichtsteile] | 0,00 | 0,00 |
| | Wasser | [Gewichtsteile] | 2,24 | 2,24 |
| | Tegostab B 8681 | [Gewichtsteile] | 0,10 | 0,10 |
| | Addocat 105 | [Gewichtsteile] | 0,16 | 0,16 |
| | Addocat 108 | [Gewichtsteile] | 0,15 | 0,15 |
| | Addocat SO | [Gewichtsteile] | 0,05 | 0,05 |
| | MDI | [MV] | 35,09 | 35,30 |
| | Kennzahl | | 90 | 90 |
| Verarbeitung | Startzeit | [s] | 10 | 10 |
| | Steigzeit | [s] | 120 | 120 |
| Eigenschaften | Schaumstabilität | | gut | gut |
| | Schaumbeurteilung | | gut | gut |
| | Zellstruktur | | fein | fein |

Abkürzung:
MV = Gewichtsverhältnis der Komponente A zu Komponente B bei der angegeben Kennzahl und bezogen auf 100 Gewichtsteile Komponente A.

**Tabelle 5**

| | Beispiel | | **C-3** | **C-4 (Vergleich)** |
|---|---|---|---|---|
| Formulierung | PET | [Gewichtsteile] | 80 | 60 |
| | A-3V | [Gewichtsteile] | | 40 |
| | Polyol aus B-2 | [Gewichtsteile] | | |
| | Polyol aus B-5 | [Gewichtsteile] | 20 | |
| | Wasser | [Gewichtsteile] | 2,30 | 2,30 |
| | Tegostab B 8681 | [Gewichtsteile] | 0,10 | 0,10 |
| | Addocat 105 | [Gewichtsteile] | 0,16 | 0,16 |
| | Addocat 108 | [Gewichtsteile] | 0,15 | 0,15 |
| | Addocat SO | [Gewichtsteile] | 0,05 | 0,05 |
| | MDI | [Gewichtsteile] | 36,24 | 36,35 |
| | Kennzahl | | 90 | 90 |
| Verarbeitung | Startzeit | [s] | 10 | 15 |
| | Steigzeit | [s] | 120 | 95 |
| Eigenschaften | Schaumstabilität | | gut | gut |
| | Schaumbeurteilung | | gut | gut |
| | Zellstruktur | | fein | fein |

**Tabelle 6**

| | Beispiel | | **C-5** | **C-6** |
|---|---|---|---|---|
| Formulierung | PET | [Gewichtsteile] | 60 | 60 |
| | A-3V | [Gewichtsteile] | | |
| | Polyol aus B-2 | [Gewichtsteile] | 40 | |
| | Polyol aus B-5 | [Gewichtsteile] | | 40 |
| | Wasser | [Gewichtsteile] | 2,30 | 2,30 |
| | Tegostab B 8681 | [Gewichtsteile] | 0,10 | 0,10 |
| | Addocat 105 | [Gewichtsteile] | 0,16 | 0,16 |
| | Addocat 108 | [Gewichtsteile] | 0,15 | 0,15 |
| | Addocat SO | [Gewichtsteile] | 0,05 | 0,05 |
| | MDI | [Gewichtsteile] | 36,76 | 36,71 |
| | Kennzahl | | 90 | 90 |
| Verarbeitung | Startzeit | [s] | 15 | 15 |
| | Steigzeit | [s] | 90 | 95 |
| Eigenschaften | Schaumstabilität | | gut | gut |
| | Schaumbeurteilung | | gut | gut |
| | Zellstruktur | | fein | fein |

Die erhaltenen Polyurethan-Weichblockschaumstoffe wurden einer optischen Beurteilung unterzogen. Die Klassifikation der Schaumstabilität erfolgte anhand einer Skala von instabil - gut - Schrumpf. Hierbei bedeutet eine Einstufung "instabil", dass der Schaumstoff starke Setzerscheinungen bis hin zu Kollaps zeigt. Eine Einstufung "gut" bedeutet, dass der Schaumstoff eine offene Zellstruktur ohne Setzerscheinungen zeigt und eine Einstufung "Schrumpf" bedeutet, dass der Schaumstoff, bedingt durch fehlende Zellöffnung, während der Ausreaktion schrumpft.

Die Klassifikation der Schaumstoffqualität hinsichtlich der Zellstruktur erfolgte anhand einer Skala von schlecht - mittel - gut. Hierbei bedeutet eine Einstufung "schlecht", dass der Schaumstoff keine einheitliche Zellstruktur und/oder sichtbare Fehlstellen aufweist. Eine Einstufung "mittel" bedeutet, dass der Schaumstoff eine hauptsächlich einheitliche Zellstruktur mit nur wenigen sichtbaren Fehlstellen aufweist und eine Einstufung "gut" bedeutet, dass der Schaumstoff eine einheitliche Zellstruktur ohne sichtbare Fehlstellen aufweist.

Die Klassifikation der Zellstruktur erfolgte anhand einer Skala von grob - mittel - fein. Hierbei bedeutet eine Einstufung "grob", dass der Schaumstoff weniger als ca. 5 Zellen pro cm aufweist. Eine Einstufung "mittel" bedeutet, dass der Schaumstoff mehr als ca. 5 Zellen pro cm aufweist und weniger als ca. 12 Zellen pro cm aufweist und eine Einstufung "fein" bedeutet, dass der Schaumstoff mehr als ca. 12 Zellen pro cm aufweist.

Die Weichschaumstoffe, zu deren Herstellung die erfindungsgemäßen Polyole verarbeitet wurden, wiesen hinsichtlich Verarbeitung und Eigenschaften ein vollkommen vergleichbares Verhalten auf wie mit den dazugehörigen Vergleichsversuchen C-1 beziehungsweise C-4 hergestellte Schäume. Die Versuche C-1, C-2 und C-3 wurden mit 80 Gewichtsteilen eines konventionellen Polyetherpolyols (PET) durchgeführt, wobei vollkommen vergleichbare Schaumstoffe erhalten wurden. Das heißt, dass die erfindungsgemäßen Polyole B-2 und B-5 geeignet sind, die konventionelle Variante zu ersetzen. Die gleiche Aussage gilt auch für die Versuche C-4, C-5 und C-6 mit jeweils erhöhtem Anteil an auf nachwachsenden Rohstoffen basierendem Polyol.

## Patentansprüche

1. Verfahren zur Herstellung von Polyricinolsäureester-Polyolen mit primären Hydroxyl-Endgruppen, umfassend die Schritte:
a) Polykondensation von Ricinolsäure, bis eine Hydroxylzahl von > 0 mg KOH/g bis ≤ 60 mg KOH/g erreicht wird;
b) Reaktion des in Schritt a) erhaltenen Produkts oder eines Carboxylgruppen umfassenden Folgeprodukts des in Schritt a) erhaltenen Produkts mit einem Epoxid der allgemeinen Formel (1): 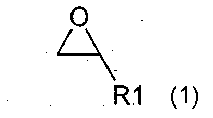 wobei R1 für Wasserstoff, einen Alkylrest oder einen Arylrest steht, mit der Maßgabe, dass > 80 Gewichts-% bis ≤ 100 Gewichts-%, bezogen auf die Gesamtmenge des eingesetzten Epoxids (1), Ethylenoxid sind und
wobei diese Reaktion in Gegenwart eines Amins als Katalysator durchgeführt wird.

2. Verfahren gemäß Anspruch 1, weiterhin umfassend zwischen Schritt a) und Schritt b) den Schritt:
a1) Reaktion des in Schritt a) erhaltenen Produkts mit einem zyklischen Carbonsäureanhydrid.

3. Verfahren gemäß Anspruch 2, wobei das in Schritt a1) eingesetzte zyklische Carbonsäureanhydrid ausgewählt ist aus der Gruppe umfassend Phthalsäureanhydrid, Teträhydrophthalsäureanhydrid, Bernsteinsäureanhydrid und/oder Maleinsäureanhydrid.

4. Verfahren gemäß Anspruch 1, wobei in Schritt b) das Epoxid der allgemeinen Formel (1) Ethylenoxid ist.

5. Verfahren gemäß Anspruch 1, wobei der Katalysator in Schritt b) ausgewählt ist aus der Gruppe umfassend:
(A1) Amine der allgemeinen Formel (2): 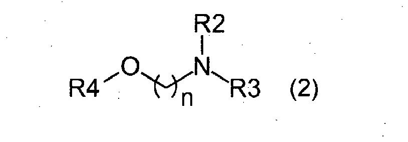 wobei gilt:
R2 und R3 sind unabhängig voneinander Wasserstoff, Alkyl oder Aryl; oder
R2 und R3 bilden gemeinsam mit dem sie tragenden N-Atom einen aliphatischen,
ungesättigten oder aromatischen Heterozyklus;
n ist eine ganze Zahl von 1 bis 10;
R4 ist Wasserstoff, Alkyl oder Aryl; oder
R4 steht für -(CH₂)ₓ-N(R41)(R42), wobei gilt:
R41 und R42 sind unabhängig voneinander Wasserstoff, Alkyl oder Aryl; oder
R41 und R42 bilden gemeinsam mit dem sie tragenden N-Atom einen aliphatischen,
ungesättigten oder aromatischen Heterozyklus;
x ist eine ganze Zahl von 1 bis 10;
(B1) Amine der allgemeinen Formel (3): 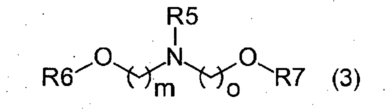 wobei gilt:
R5 ist Wasserstoff, Alkyl oder Aryl;
R6 und R7 sind unabhängig voneinander Wasserstoff, Alkyl oder Aryl;
m und o sind unabhängig voneinander eine ganze Zahl von 1 bis 10;
und/oder:
(C1) Diazabicyclo[2.2.2]octan, Diazabicyclo[5.4.0]undec-7-en, Dialkylbenzylamin,
Dimethylpiperazin, 2,2'-Dimorpholinyldiethylether und/oder Pyridin.

6. Verfahren gemäß Anspruch 5, wobei in dem Amin der allgemeinen Formel (2) R2 und R3 Methyl sind, R4 Wasserstoff ist und n = 2 ist oder aber R2 und R3 Methyl sind, R4 -(CH₂)₂-N(CH₃)₂ ist und n = 2 ist.

7. Verfahren gemäß Anspruch 5, wobei in dem Amin der allgemeinen Formel (3) R5 Methyl ist, R6 und R7 Wasserstoff sind, m = 2 ist und o = 2 ist.

8. Verfahren gemäß Anspruch 1, wobei in Schritt b) die Reaktion mit dem Epoxid der allgemeinen Formel (1) bei einer Temperatur von ≥ 70 °C bis ≤ 150 °C stattfindet.

9. Polyricinolsäureester-Polyol mit primären Hydroxyl-Endgruppen, erhältlich durch ein Verfahren gemäß einem der Ansprüche 1 bis 8.

10. Polyricinolsäureester-Polyol gemäß Anspruch 9 mit einem Gehalt an primären Hydroxyl-Endgruppen von ≥ 55 mol-% bis ≤ 95 mol-%.

11. Polyricinolsäureester-Polyol gemäß Anspruch 9 mit einer Säurezahl von ≥ 0 mg KOH/g bis ≤ 1 mg KOH/g.

12. Polyricinolsäureester-Polyol gemäß Anspruch 9, vorliegend in Form einer Zusammensetzung, die als weiteren Bestandteil umfasst:
(A2) Amine der allgemeinen Formel (5): 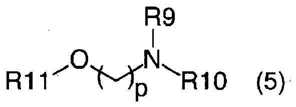 wobei gilt:
R9 und R10 sind unabhängig voneinander Wasserstoff, Alkyl oder Aryl; oder
R9 und R10 bilden gemeinsam mit dem sie tragenden N-Atom einen aliphatischen,
ungesättigten oder aromatischen Heterozyklus;
p ist eine ganze Zahl von 1 bis 10;
R11 ist Wasserstoff, Alkyl oder Aryl; oder
R11 steht für -(CH₂)_{y}-N(R12)(R13), wobei gilt:
R12 und R13 sind unabhängig voneinander Wasserstoff, Alkyl oder Aryl; oder
R12 und R13 bilden gemeinsam mit dem sie tragenden N-Atom einen aliphatischen,
ungesättigten oder aromatischen Heterozyklus;
y ist eine ganze Zahl von 1 bis 10;
(B2) Amine der allgemeinen Formel (6): 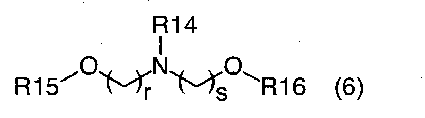 wobei gilt:
R14 ist Wasserstoff, Alkyl oder Aryl;
R15 und R16 sind unabhängig voneinander Wasserstoff, Alkyl oder Aryl;
r und s sind unabhängig voneinander eine ganze Zahl von 1 bis 10;
und/oder:
(C2) Diazabicyclo[2.2.2]octan, Diazabicyclo[5.4.0]undec-7-en, Dialkylbenzylamin, Dimethylpiperazin, 2,2'-Dimorpholinyldiethylether und/oder Pyridin.

13. Polyurethanpolymer, erhältlich aus der Reaktion eines Polyricinolsäureester-Polyols gemäß einem der Ansprüche 9 bis 12 mit einem Polyisocyanat.

14. Verfahren zur Herstellung von Polyurethanweichschaumstoffen mit einer Rohdichte gemäß DIN EN ISO 3386-1-98 im Bereich von ≥ 10 kg/m³ bis ≤ 150 kg/m³ und einer Stauchhärte gemäß DIN EN ISO 3386-1-98 im Bereich von ≥ 0,5 kPa bis ≤ 20 kPa (bei 40% Verformung und 4. Zyklus) durch Umsetzung von
Komponente A enthaltend
A1 50 bis 95 Gew.-Teile (bezogen auf die Summe der Gew.-Teile der Komponenten A1 und A2) konventionelles Polyetherpolyol,
A2 5 bis 50 Gew.-Teile (bezogen auf die Summe der Gew.-Teile der Komponenten A1 und
A2) Polyricinolsäureester gemäß einem der Ansprüche 9 bis 11,
A3 0,5 bis 25 Gew.-Teile (bezogen auf die Summe der Gew.-Teile der Komponenten A1 und
A2) Wasser und/oder physikalische Treibmittel,
A4 0,05 bis 10 Gew.-Teile (bezogen auf die Summe der Gew.-Teile der Komponenten A1
und A2) Hilfs- und Zusatzstoffe wie
d) Katalysatoren,
e) oberflächenaktive Zusatzstoffe,
f) Pigmente oder Flammschutzmittel.
mit Komponente B enthaltend Polyisocyanate,
wobei die Herstellung bei einer Kennzahl von 50 bis 250 erfolgt, und wobei alle Gewichtsteilangaben der Komponenten A1 bis A5 in der vorliegenden Anmeldung so normiert sind, dass die Summe der Gewichtsteile der Komponenten A1+A2 in der Zusammensetzung 100 ergibt.

15. Polyurethanpolymer gemäß Anspruch 13, vorliegend als Polyurethan-Weichschaum.

## Claims

1. Process for the preparation of polyricinoleic acid ester polyols having primary hydroxyl end groups, comprising the steps:
a) polycondensation of ricinoleic acid until a hydroxyl number of > 0 mg of KOH/g to ≤ 60 mg of KOH/g is reached;
b) reaction of the product obtained in step a) or of a secondary product of the product obtained in step a) comprising carboxyl groups with an epoxide of the general formula (1) : 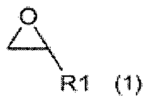 wherein R1 represents hydrogen, an alkyl radical or an aryl radical, with the proviso that ≥ 80 % by weight to ≤ 100 % by weight, based on the total amount of the epoxide (1) employed, is ethylene oxide, and
wherein this reaction is carried out in the presence of an amine as the catalyst.

2. Process according to claim 1, furthermore comprising, between step a) and step b), the step:
a1) reaction of the product obtained in step a)
with a cyclic carboxylic acid anhydride.

3. Process according to claim 2, wherein the cyclic carboxylic acid anhydride employed in step a1) is chosen from the group comprising phthalic anhydride, tetrahydrophthalic anhydride, succinic anhydride and/or maleic anhydride.

4. Process according to claim 1, wherein in step b) the epoxide of the general formula (1) is ethylene oxide.

5. Process according to claim 1, wherein the catalyst in step b) is chosen from the group comprising:
(A1) amines of the general formula (2): 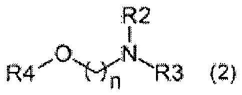 wherein:
R2 and R3 independently of each other are hydrogen, alkyl or aryl; or
R2 and R3 together with the N atom carrying them form an aliphatic, unsaturated or aromatic heterocycle;
n is an integer from 1 to 10;
R4 is hydrogen, alkyl or aryl; or
R4 represents -(CH₂)ₓ-N(R41)(R42), wherein:
R41 and R42 independently of each other are
hydrogen, alkyl or aryl; or
R41 and R42 together with the N atom carrying
them form an aliphatic, unsaturated or aromatic heterocycle;
x is an integer from 1 to 10;
(B1) amines of the general formula (3): 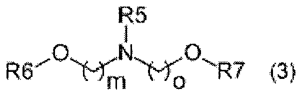 wherein:
R5 is hydrogen, alkyl or aryl;
R6 and R7 independently of each other are hydrogen, alkyl or aryl;
m and o independently of each other are an integer from 1 to 10;
and/or:
(C1) diazabicyclo[2.2.2]octane,
diazabicyclo[5.4.0]undec-7-ene, dialkylbenzylamine, dimethylpiperazine, 2,2'-dimorpholinyldiethyl ether and/or pyridine.

6. Process according to claim 5, wherein in the amine of the general formula (2) R2 and R3 are methyl, R4 is hydrogen and n = 2, or R2 and R3 are methyl, R4 is -(CH₂)₂-N(CH₃)₂ and n = 2.

7. Process according to claim 5, wherein in the amine of the general formula (3) R5 is methyl, R6 and R7 are hydrogen, m = 2 and o = 2.

8. Process according to claim 1, wherein in step b) the reaction takes place with the epoxide of the general formula (1) at a temperature of from ≥ 70 ºC to ≤ 150 ºC).

9. Polyricinoleic acid ester polyol having primary hydroxyl end groups, obtainable by a process according to one of claims 1 to 8.

10. Polyricinoleic acid ester polyol according to claim 9 having a content of primary hydroxyl end groups of from ≥ 55 mol% to ≤ 95 mol%.

11. Polyricinoleic acid ester polyol according to claim 9 having an acid number of from ≥ 0 mg of KOH/g to ≤ 1 mg of KOH/g.

12. Polyricinoleic acid ester polyol according to claim 9, in the form of a composition which comprises as a further constituent:
(A2) amines of the general formula (5): 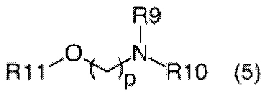 wherein:
R9 and R10 independently of each other are
hydrogen, alkyl or aryl; or
R9 and R10 together with the N atom carrying
them form an aliphatic, unsaturated or aromatic heterocycle;
p is an integer from 1 to 10;
R11 is hydrogen, alkyl or aryl; or
R11 represents -(CH₂)_{y}-N(R12)(R13), wherein:
R12 and R13 independently of each other are
hydrogen, alkyl or aryl; or
R12 and R13 together with the N atom carrying
them form an aliphatic, unsaturated or aromatic heterocycle;
y is an integer from 1 to 10;
(B2) amines of the general formula (6): 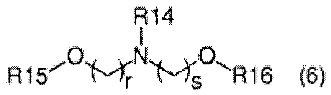 wherein:
R14 is hydrogen, alkyl or aryl;
R15 and R16 independently of each other are
hydrogen, alkyl or aryl;
r and s independently of each other are an
integer from 1 to 10;
and/or:
(C2) diazabicyclo[2.2.2]octane,
diazabicyclo[5.4.0]undec-7-ene, dialkylbenzylamine, dimethylpiperazine, 2,2'-dimorpholinyldiethyl ether and/or pyridine.

13. Polyurethane polymer obtainable from the reaction of a polyricinoleic acid ester polyol according to one of claims 9 to 12 with a polyisocyanate.

14. Process for the production of flexible polyurethane foams having a bulk density according to DIN EN ISO 3386-1-98 in the range of from ≥ 10 kg/m³ to ≤ 150 kg/m³ and a compressive strength according to DIN EN ISO 3386-1-98 in the range of from ≥ 0.5 kPa to ≤ 20 kPa (at 40 % deformation and the 4th cycle) by reaction of component A comprising
A1 50 to 95 parts by wt. (based on the sum of the
parts by wt. of components A1 and A2) of conventional polyether polyol,
A2 5 to 50 parts by wt. (based on the sum of the
parts by wt. of components A1 and A2) of polyricinoleic acid ester according to one of claims 9 to 11,
A3 0.5 to 25 parts by wt. (based on the sum of the
parts by wt. of components A1 and A2) of water and/or physical blowing agents,
A4 0.05 to 10 parts by wt. (based on the sum of
the parts by wt. of components A1 and A2) of auxiliary substances and additives, such as d) catalysts,
e) surface-active additives,
f) pigments or flameproofing agents,
with component B comprising polyisocyanates, wherein the production is carried out at a characteristic number of from 50 to 250 and wherein all the parts by weight stated for components A1 to A5 in the present application are standardized such that the sum of the parts by weight of components A1+A2 in the composition is 100.

15. Polyurethane polymer according to claim 13, in the form of a flexible polyurethane foam.

## Revendications

1. Procédé pour la préparation d'ester de poly(acide ricinoléique)-polyols comportant des groupes terminaux hydroxy primaires, comprenant les étapes :
a) polycondensation d'acide ricinoléique, jusqu'à ce que soit atteint un indice de groupes hydroxy de > 0 mg de KOH/g à ≤ 60 mg de KOH/g ;
b) réaction du produit obtenu dans l'étape a), ou d'un dérivé, comprenant des groupes carboxy, du produit obtenu dans l'étape a), avec un époxyde de formule générale (1) : 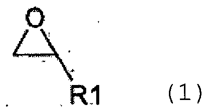 où R1 représente un atome d'hydrogène, un radical alkyle ou un radical aryle, étant entendu que ≥ 80 % en poids à ≤ 100 % en poids, par rapport à la quantité totale de l'époxyde (1) utilisé, consistent en oxyde d'éthylène et
dans lequel cette réaction est effectuée en présence d'une amine en tant que catalyseur.

2. Procédé selon la revendication 1, en outre comprenant entre l'étape a) et l'étape b) l'étape :
a1) réaction du produit obtenu dans l'étape a) avec un
anhydride d'acide carboxylique cyclique.

3. Procédé selon la revendication 2, dans lequel l'anhydride d'acide carboxylique cyclique utilisé dans l'étape a1) est choisi dans le groupe comprenant l'anhydride phtalique, l'anhydride tétrahydrophtalique, l'anhydride succinique et/ou l'anhydride maléique.

4. Procédé selon la revendication 1, dans lequel dans l'étape b) l'époxyde de formule générale (1) est l'oxyde d'éthylène.

5. Procédé selon la revendication 1, dans lequel le catalyseur dans l'étape b) est choisi dans le groupe comprenant :
(A1) des amines de formule générale (2) : 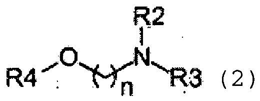 dans laquelle :
R2 et R3 représentent indépendamment l'un de l'autre un atome d'hydrogène, un groupe alkyle ou aryle ; ou
R2 et R3 forment ensemble avec l'atome d'azote qui les porte un hétérocycle aliphatique, insaturé ou aromatique ;
n est un nombre entier valant de 1 à 10 ;
R4 est un atome d'hydrogène, un groupe alkyle ou aryle ; ou
R4 représente -(CH₂)ₓ-N(R41)(R42), où :
R41 et R42 représentent indépendamment l'un de l'autre un atome d'hydrogène, un groupe alkyle ou aryle ; ou
R41 et R42 forment ensemble avec l'atome d'azote qui les porte un hétérocycle aliphatique, insaturé ou aromatique ;
x est un nombre entier valant de 1 à 10 ;
(B1) des amines de formule générale (3) : 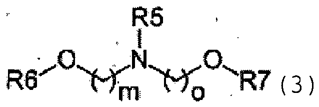 dans laquelle :
R5 est un atome d'hydrogène, un groupe alkyle ou
aryle ;
R6 et R7 représentent indépendamment l'un de l'autre un atome d'hydrogène, un groupe alkyle ou
aryle ;
m et o représentent indépendamment l'un de l'autre un nombre entier valant de 1 à 10 ;
et/ou :
(C1) le diazabicyclo[2.2.2]octane, le diazabicyclo-[5.4.0]undéc-7-ène, une dialkylbenzylamine, la diméthylpipérazine, l'éther 2,2'-dimorpholinyl-diéthylique et/ou la pyridine.

6. Procédé selon la revendication 5, dans lequel dans l'amine de formule générale (2) R2 et R3 représentent le groupe méthyle, R4 est un atome d'hydrogène et n est égal à 2 ou bien R2 et R3 représentent le groupe méthyle, R4 est -(CH₂)₂-N(CH₃)₂ et n est égal à 2.

7. Procédé selon la revendication 5, dans lequel dans l'amine de formule générale (3) R5 est le groupe méthyle, R6 et R7 sont des atomes d'hydrogène, m est égal à 2 et o est égal à 2.

8. Procédé selon la revendication 1, dans lequel dans l'étape b) la réaction avec l'époxyde de formule générale (1) a lieu à une température de ≥ 70 °C à ≤ 150 °C.

9. Ester de poly(acide ricinoléique)-polyol comportant des groupes terminaux hydroxy primaires, pouvant être obtenus par un procédé selon l'une quelconque des revendications 1 à 8.

10. Ester de poly(acide ricinoléique)-polyol selon la revendication 9, ayant une teneur en groupes terminaux hydroxy primaires de ≥ 55 % en moles à ≤ 95 % en moles.

11. Ester de poly(acide ricinoléique)-polyol selon la revendication 9, ayant un indice d'acide de ≥ 0 mg de KOH/g à ≤ 1 mg de KOH/g.

12. Ester de poly(acide ricinoléique)-polyol selon la revendication 9, présent sous forme d'une composition qui comprend comme autre composant :
(A2) des amines de formule générale (5) : 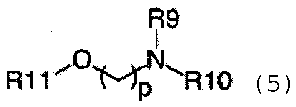 dans laquelle :
R9 et R10 représentent indépendamment l'un de l'autre un atome d'hydrogène, un groupe alkyle ou
aryle ; ou
R9 et R10 forment ensemble avec l'atome d'azote qui les porte un hétérocycle aliphatique, insaturé ou aromatique ;
p est un nombre entier valant de 1 à 10 ;
R11 est un atome d'hydrogène, un groupe alkyle ou
aryle ; ou
R11 représente -(CH₂)_{y}-N(R12)(R13), où :
R12 et R13 représentent indépendamment l'un de l'autre un atome d'hydrogène, un groupe alkyle ou aryle ; ou
R12 et R13 forment ensemble avec l'atome d'azote qui les porte un hétérocycle aliphatique, insaturé ou aromatique ;
y est un nombre entier valant de 1 à 10 ;
(B2) des amines de formule générale (6) : 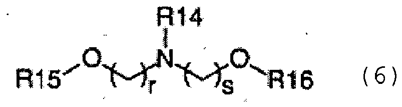 dans laquelle :
R14 est un atome d'hydrogène, un groupe alkyle ou
aryle ;
R15 et R16 représentent indépendamment l'un de l'autre un atome d'hydrogène, un groupe alkyle ou
aryle ;
r et s représentent indépendamment l'un de l'autre
un nombre entier valant de 1 à 10 ;
et/ou :
(C2) le diazabicyclo[2.2.2]octane, le diazabicyclo-[5.4.0]undéc-7-ène, une dialkylbenzylamine, la diméthylpipérazine, l'éther 2,2'-dimorpholinyl-diéthylique et/ou la pyridine.

13. Polymère polyuréthane, pouvant être obtenu à partir de la réaction d'un ester de poly(acide ricinoléique)-polyol selon l'une quelconque des revendications 9 à 12 avec un polyisocyanate.

14. Procédé pour la production de mousses souples de polyuréthane ayant une densité apparente selon DIN EN ISO 3386-1-98 dans la plage de ≥ 10 kg/m³ à ≤ 150 kg/m³ et une dureté à l'écrasement selon DIN EN ISO 3386-1-98 dans la plage de ≥ 0,5 kPa à ≤ 20 kPa (à une déformation de 40 % et en 4 cycles) par mise en réaction
d'un composant A contenant
A1 50 à 95 parties en poids (par rapport à la somme
des parties en poids des composants A1 et A2) de polyétherpolyol traditionnel,
A2 5 à 50 parties en poids (par rapport à la somme
des parties en poids des composants A1 et A2) d'ester de poly(acide ricinoléique) selon l'une quelconque des revendications 9 à 11,
A3 0,5 à 25 parties en poids (par rapport à la somme
des parties en poids des composants A1 et A2) d'eau et/ou d'agent porogène physique,
A4 0,05 à 10 parties en poids (par rapport à la somme
des parties en poids des composants A1 et A2) d'adjuvants et additifs, tels que
d) des catalyseurs,
e) des additifs tensioactifs,
f) des pigments ou des agents ignifuges,
avec un composant B contenant des polyisocyanates,
la production s'effectuant à un indice de 50 à 250 et toutes les données en parties en poids des composants A1 à A5 dans la présente demande étant normalisées de sorte que la somme des parties en poids des composants .A1+A2 dans la composition est égale à 100.

15. Polymère polyuréthane selon la revendication 13, se trouvant sous forme de mousse souple de polyuréthane.
